# EUROPEAN PATENT SPECIFICATION

(11) **EP 2 565 848 B1**
(45) Date of publication and mention of the grant of the patent: **07.07.2021**
(21) Application number: 12182004.7
(22) Date of filing: 28.08.2012
(51) Int. Cl.: G06T 15/20

(54) **Program, information processing apparatus, information processing system, and information processing method**
Programm, Informationsverarbeitungsvorrichtung, Informationsverarbeitungssystem und Informationsverarbeitungsverfahren
Programme, appareil de traitement d'informations, système de traitement d'informations et programme de traitement d'informations

(30) Priority: 05.09.2011 JP 2011192982
(43) Date of publication of application: 06.03.2013
(73) Proprietor: NINTENDO CO., LTD., Minami-ku, Kyoto 601-8501 (JP)
(72) Inventor: Shimizu, Takao, Kyoto, 601-8501 (JP)
(74) Representative: Lang, Johannes

(56) References cited:
- EP-A2- 1 136 107
- US-A1- 2007 270 215
- US-A1- 2008 070 684
- US-B1- 6 325 717
- LEPETIT V ET AL: "Handling occlusion in augmented reality systems: a semi-automatic method", AUGMENTED REALITY, 2000. (ISAR 2000). PROCEEDINGS. IEEE AND ACM INTERN ATIONAL SYMPOSIUM ON MUNICH, GERMANY 5-6 OCT. 2000, PISCATAWAY, NJ, USA,IEEE, US, 5 October 2000 (2000-10-05), pages 137-146, XP010520323, DOI: 10.1109/ISAR.2000.880937 ISBN: 978-0-7695-0846-7
- None

## Description

### [Technical Field]

This invention relates to a program, an information processing apparatus, an information processing system, and an information processing method, for displaying images.

### [Background Art]

Conventionally known is a three-dimensional image technique in which a virtual object consisting of polygons is rendered from various directions determined according to a user's operation, and the user is thereby allowed to observe the virtual object from various directions.

Japanese Patent Application Laid-Open NO. 2004-287504 discloses an image generation apparatus in which a plurality of texture images are preliminarily prepared by omnidirectionally viewing an object to be displayed having a three-dimensional shape, and arranging a plate polygons in virtual space such that its front face faces the position of a viewpoint. This image generation apparatus specifies a texture image based on the orientation in the virtual space of the plate polygon the front face of which faces the position of the viewpoint, and the specified texture image is mapped onto the plate polygon.

### [Patent document]

[Patent document 1] Japanese Patent Application Laid-Open No. 2004-2875504. Additional relevant prior art is indicated hereafter.

US 6 325 717 B1 (Kawagoe Takumi et al), 4 December 2001 (2001-12-04) relates to a video game apparatus and method with enhanced virtual camera control.

US 2007/270215 A1 (Miyamoto Shigeru), 22 November 2007 (2007-11-22) relates to a method and an apparatus for enhanced virtual camera control within 3D video games.

EP 1 136 107 A2 (Konami Comp Entertainment), 26 September 2001 (2001-09-26) relates to a game system, a computer readable storage medium storing game program and an image displaying method.

### [Summary of the invention]

### [Problems to be solved by the invention]

There are conventional techniques which are designed to allow a user to observe a predetermined object from various angles by modeling the predetermined object as a virtual object, and rendering this virtual object from various anlges. However, when a predetermined object to be observed by the user is modeled as a virtual object, there arises a difference between the object and the virtual object in what the user actually views once the object is modeled as the virtual object. This means that, according to the conventional virtual object displaying techniques, it is difficult to give realistic feeling to the user observing the virtual object due to the visual difference between the predetermined object to be observed by the user and the virtual object.

In view of the problems as described above, an object of this invention is to improve the realistic feeling given to the user when the user observes an object from various directions.

### [Means for solving the Problems]

The invention is set out in the appended set of claims. In order to solve the aforementioned problems, this invention adopts the following measures. Specifically, the invention provides a program for causing a computer connected to a display device to function as: rendering means for rendering a virtual object image by imaging a virtual object arranged in a virtual space and mimicking a predetermined object by means of a virtual camera arranged in the virtual space; virtual camera setting means for setting a parameter for the virtual camera; switching condition determination means for determining that a predetermined switching condition has been satisfied when a shooting angle of the virtual camera relative to the virtual object determined according to the parameter becomes within a predetermined range; output control means for selectively outputting, to the display device, either the virtual object image rendered by the rendering means or an image for switching preliminarily obtained by imaging the predetermined object from a shooting angle corresponding to the predetermined range; and switching means for switching the output image to be output by the output control means from the virtual object image to the image for switching, when the switching condition determination means determines that the switching condition has been satisfied.

In this invention, the term "predetermined object" means an entity having an appearance visible to the user, such as an art work, a building, a product, a person, and an animal. However, the predetermined object is not limited to these. The predetermined object may be an entity which really exists in the real world or may be an entity which does not exist. The predetermined range may be a range defined by the upper and lower values which are the same (that is, the range contains only one value satisfying the condition).

According to the program of this invention, a virtual object image obtained by rendering a virtual object mimicking a predetermined object as defined above is output to a display device. Then, according to the program of this invention, the output image output to the display device is switched over to an image for switching imaged from a shooting angle corresponding to (for example, from an angle identical or close to) the shooting angle of the virtual object image, when the predetermined switching condition is satisfied.

In the program, the image for switching may be an image obtained by preliminarily imaging a real entity of the predetermined object with a real camera.

In the program, the image for switching may be an image obtained by preliminarily rendering a high-precision virtual object of the predetermined object which is modeled with a higher precision than the virtual object.

It is made possible to display a more realistic image than a virtual object image at a predetermined angle by using, as the image for switching, an image having a higher definition than the virtual object image such as an image imaged with a real camera or an image obtained by rendering a high-precision virtual object.

In the program, the switching condition determination means may determine that the switching condition has been satisfied when a shooting angle and a shooting position of the virtual camera relative to the virtual object which are determined according to the parameter become within a predetermined range.

Thus, not only the shooting angle but also the shooting position is referred to as switching conditions, whereby the difference in what the user views is reduced between the virtual object image before switching and the image for switching to which the output image is switched, making it possible to switch the output image while improving the realistic feeling giving to the user.

The program may further cause the computer to function as: return condition determination means for determining for determining whether or not a predetermined return condition has been satisfied in a state in which the output image is switched to the image for switching by the switching means; and return means for returning the output image to the virtual object image rendered by the rendering means when the return condition determination means determines that the return condition has been satisfied.

The output image is returned to the virtual object image when the predetermined return conditions are satisfied, whereby it is made possible to allow the user to observe the object while the output image is changed reciprocally between the virtual object image and the image for switching. The predetermined return conditions include, for example, that a predetermined input has been accepted by input acceptance means, the shooting position and imageable range of the virtual camera are out of the range satisfying the switching conditions, and the display range of the display device has reached an end of the image for switching.

Further, in the program, when the switching condition determination means determines that the switching condition has been satisfied, the virtual camera setting means may set the parameter, before the switching means switches the output image, such that the shooting angle of the virtual camera relative to the virtual object gradually changes toward a shooting angle corresponding to a shooting angle of the image for switching; and the rendering means may render the virtual object image also during the change of the parameter.

Further, in the program, when the switching condition determination means determines that the switching condition has been satisfied, the virtual camera setting means may set the parameter, before the switching means switches the output image, such that the shooting angle and a shooting position of the virtual camera relative to the virtual object gradually change toward a shooting angle and a shooting position corresponding to a shooting angle and a shooting position of the image for switching; and the rendering means may render the virtual object image also during the change of the parameter.

Performing the processing as described above makes it possible to approximate the virtual object image to the image for switching before the output image is switched from the virtual object image to the image for switching, whereby improved realistic feeling can be given to the user.

In the program, the switching condition determination means may determine whether or not any of a plurality of switching conditions has been satisfied; and when the switching condition determination means determines that any of the switching conditions has been satisfied, the switching means may switch the output image to one of a plurality of images for switching which is associated with the switching condition determined to have been satisfied.

Further, the program may further cause the computer to function as input acceptance means for accepting an input based on a user's operation, and the virtual camera setting means may set the parameter according to the input accepted by the input acceptance means.

The provision of the input acceptance means as described above makes it possible to allow the user to arbitrarily adjust the shooting angle or the shooting position of the virtual camera relative to the virtual object by his/her own operation, and to display the image for switching on the display device.

Further, in the program, the virtual camera setting means may set the parameter such that the virtual object is positioned within an imageable range of the virtual camera.

The provision of the virtual camera setting means as described above eliminates the need for the user to perform an operation to intentionally adjust the imaging direction of the virtual camera toward the virtual object. This means that the user is allowed to observe the predetermined object from various shooting angles or shooting positions by a simple operation without giving consideration to the imaging direction of the virtual camera.

Further, in the program, the rendering means may render two virtual object images in a stereoscopically viewable manner by imaging with two virtual cameras; and the switching means may switch the output image to be output to the display device from the two virtual object images rendered by the rendering means to two stereoscopically viewable images for switching.

This invention can be considered as a method implemented by a computer or a program implemented by a computer. Further, this invention may be such a program recorded on a recording medium which is readable by a computer or other device or machine. The recording medium readable by a computer or the like as used herein is a recording medium on which information such as data or a program is stored in an electrical, magnetic, optical, mechanical, or chemical form that is readable by a computer or the like.

### [Effects of the invention]

According to this invention, the realistic feeling given to a user can be improved when the user observes an object from various directions.

### [Brief Description of the Drawings]

FIG. 1 is an external view of a game device according to an embodiment of the invention;
FIG. 2 is a block diagram illustrating an internal configuration of the game device according to the embodiment;
FIG. 3 is a diagram schematically illustrating an image displaying function provided to a user with the use of the game device according to the embodiment;
FIG. 4 is a diagram illustrating a relationship between a virtual object and a virtual camera arranged in a virtual space according to the embodiment;
FIG. 5 is a diagram illustrating information held by the game device according to the embodiment;
FIG. 6 is a functional block diagram of the game device according to the embodiment;
FIG. 7A is a flowchart A illustrating a flow of output image control processing according to the embodiment; and
FIG. 7B is a flowchart B illustrating a flow of output image control processing according to the embodiment.

### [Description of the Embodiments]

An exemplary preferred embodiment of this invention will be described with reference to the accompanying drawings.

However, the embodiment described below is only preferred example of this invention and the invention is not limited to the specific configuration described below. The invention may be embodied by employing the specific configuration according to an embodiment as appropriate. For example, although the following description of this embodiment will be made in terms of a case in which this invention is applied to a game device, the application of this invention is not limited solely to a game.

### <Device Configuration>

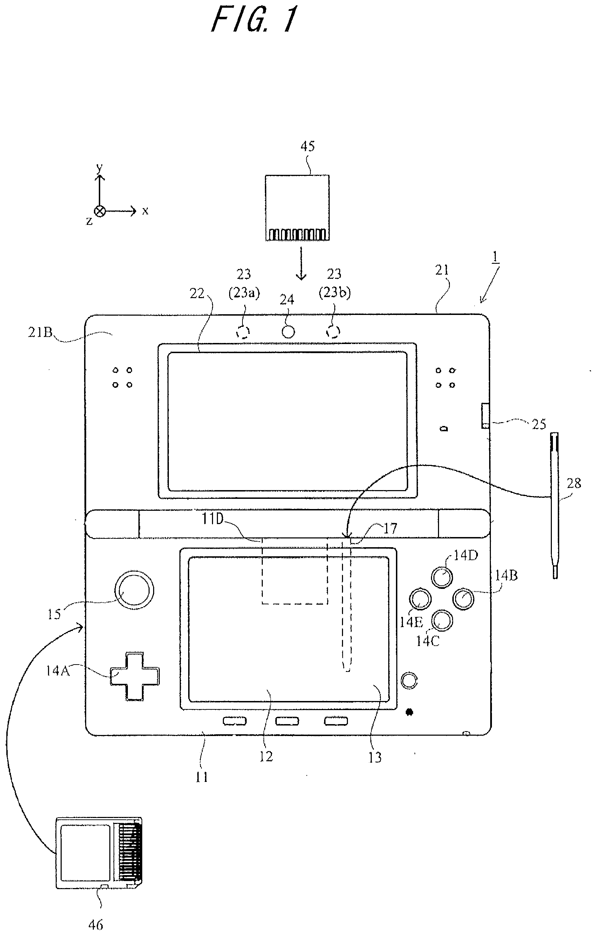

FIG. 1 is an external view of a game device 1 according to this embodiment. The game device 1 has a lower housing 11 and an upper housing 21. The lower housing 11 and the upper housing 21 are coupled to each other in a closable manner (in a foldable manner) by means of a hinge structure.

The lower housing 11 is provided with a lower LCD (Liquid Crystal Display) 12, a touch panel 13, operation buttons 14A to 14E, an analog stick 15, a slot 11D, and a slot 17.

The lower LCD 12 is a display device for displaying an image in a planar manner (not in a stereoscopically viewable manner) . The touch panel 13 is one of input units the game device 1 has. A touch pen 28 used for input to the touch panel 13 is accommodated by being inserted through the slot 17 (indicated by the dashed line in FIG. 1). A user's finger may be used in place of the touch pen 28.

The operation buttons 14A to 14E are input units for performing predetermined input, respectively. The buttons 14A to 14E are assigned with respective functions as appropriate according to a program executed by the game device 1. For example, the cross button 14A is used for selection operation or operation for moving character objects during play of a game. For example, the operation buttons 14B to 14E are used for SELECT or CANCEL operation. The analog stick 15 is a device for indicating a direction.

The slot 11D (indicated by the dashed line in FIG. 1) is provided with an insertion opening 11D for inserting an external memory 45 recording a program.

The upper housing 21 is provided with an upper LCD 22, an outside left imaging unit 23a, an outside right imaging unit 23b, an inside imaging unit 24, and a 3D adjustment switch 25.

The upper LCD 22 is a display device which can be switched between a stereoscopic display mode for displaying a stereoscopically viewable image and a planar display mode for displaying an image in a planar manner (displaying a planar image) . These display modes are switched by means of the 3D adjustment switch 25.

The inside imaging unit 24 is an imaging unit having an imaging direction that is a direction normal to the inner face 21B of the upper housing 21, and pointing inward of the inner face 12B. The outside left imaging unit 23a and outside right imaging unit 23b are both imaging units having an imaging direction that is a direction normal to the outer face of the upper housing 21 on the opposite side of the inner face 21B, and pointing outward of the outer face of the upper housing 21. Hereafter, the outside left imaging unit 23a and the outside right imaging unit 23b shall be collectively referred as the outside imaging units 23.

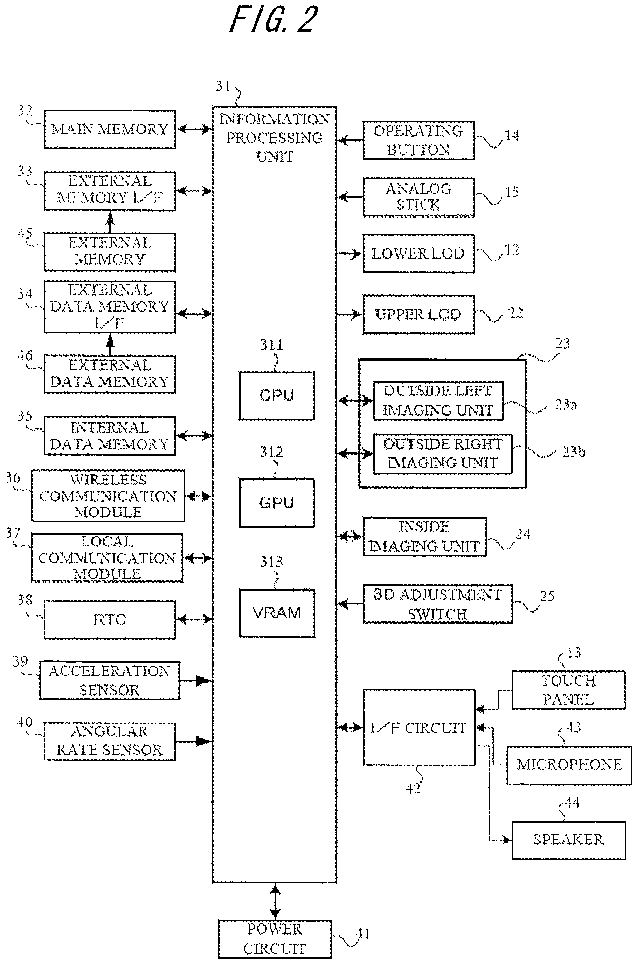

FIG. 2 is a block diagram illustrating an internal configuration of the game device 1 according to the embodiment. The game device 1 has, in addition to the aforementioned components, an information processing unit 31, a main memory 32, an external memory interface (external memory I/F) 33, an external data memory I/F 34, an internal data memory 35, a wireless communication module 36, a local communication module 37, a real-time clock (RTC) 38, an acceleration sensor 39, an angular rate sensor 40, a power circuit 41, an interface circuit (I/F circuit) 42, and other electronic components. These electronic components are mounted on an electronic circuit board and accommodated in the lower housing 11 (alternatively, they may be accommodated in the upper housing 21) .

The information processing unit 31 includes a CPU (Central Processing Unit) 311 for executing a predetermined program, a GPU (Graphics Processing Unit) 312 for performing image processing, a VRAM (Video RAM) 313, and so on. The CPU 311 performs predetermined processing by executing the predetermined program stored in a memory within the game device 1 (e.g. the external memory 45 connected to the external memory I/F 33 or the internal data memory 35). The program executed by the CPU 311 of the information processing unit 31 may be acquired from other equipment by communication with this equipment. The GPU 312 of the information processing unit 31 generates an image in response to a command from the CPU 311 of the information processing unit 31, and renders the image in the VRAM 313. The image rendered in the VRAM 313 is output to and displayed on the upper LCD 22 and/or the lower LCD 12.

The information processing unit 31 is connected to the main memory 32, the external memory I/F 33, the external data memory I/F 34, and the internal data memory 35. The external memory I/F 33 is an interface for removably connecting the external memory 45. The external data memory I/F 34 is an interface for removably connecting an external data memory 46.

The main memory 32 is volatile storing means which is used as a work area or a buffer area of the information processing unit 31 (CPU 311). The main memory 32 serves to temporarily store various data, or to temporarily store program acquired from outside (from the external memory 45 or other equipment). In this embodiment, a PSRAM (Pseudo-SRAM), for example, is used as the main memory 32.

The external memory 45 is nonvolatile storing means for storing a program executed by the information processing unit 31. The external memory 45 is formed, for example, of a read-only semiconductor memory. Once the external memory 45 is connected to the external memory I/F 33, the information processing unit 31 is enabled to read the program stored in the external memory 45. Predetermined processing is performed by the information processing unit 31 executing the read program.

The external data memory 46 is a nonvolatile random access memory (e.g. a NAND flash memory), and is used for storing predetermined data. For example, the external data memory 46 may be a SD card. The internal data memory 35 is formed of a nonvolatile random access memory (e.g. a NAND flash memory), and is used for storing predetermined data. For example, the external data memory 46 and the internal data memory 35 store data or a program downloaded by wireless communication through the wireless communication module 36.

The information processing unit 31 is connected to the wireless communication module 36 and the local communication module 37. The wireless communication module 36 has a function to establish connection with a wireless LAN by a method based on IEEE802.11b/g standard, for example. The information processing unit 31 is able to exchange data with other equipment via the Internet with the use of the wireless communication module 36, and to perform direct wireless communication with another game device 1 in an ad-hoc mode based on IEEE802.11b/g. The local communication module 37 has a function to perform wireless communication with a game device of the same type by a predetermined communication method (e.g. infrared-ray communication). The information processing unit 31 is capable of exchanging data with another game device of the same kind with the use of the local communication module 37.

The information processing unit 31 is connected to the acceleration sensor 39. The acceleration sensor 39 detects a magnitude of linear acceleration along triaxial directions. The acceleration sensor 39 may be a capacitance-type acceleration sensor, or an acceleration sensor of any other type. The acceleration sensor 39 also may be an acceleration sensor for detecting acceleration in a uniaxial direction or biaxial directions. The information processing unit 31 receives data indicating the acceleration (acceleration data) detected by the acceleration sensor 39 and calculates an attitude and motion of the game device 1.

The information processing unit 31 is connected to the angular rate sensor 40. The angular rate sensor 40 detects an angular velocity about each of the three axes of the game device 1, and outputs data indicating the detected angular velocity (angular velocity data) to the information processing unit 31. Upon receiving the angular velocity data output from the angular rate sensor 40, the information processing unit 31 calculates an attitude and motion of the game device 1.

The information processing unit 31 is connected to the RTC 38 and the power circuit 41. The RTC 38 counts time and outputs the count data to the information processing unit 31. The information processing unit 31 calculates current time based on the time counted by the RTC 38. The power circuit 41 controls electric power supplied from a power supply provided in the game device 1 (the aforementioned rechargeable battery accommodated in the lower housing 11) and supplies the power to the components in the game device 1.

The information processing unit 31 is connected to the I/F circuit 42. The I/F circuit 42 is connected to a microphone 43, a speaker 44, and the touch panel 13. The microphone 43 senses the user's voice and outputs a voice signal to the I/F circuit 42. The speaker 44 amplifies the voice signal from the I/F circuit 42 by means of an amplifier (not shown) and outputs the voice. The I/F circuit 42 includes a voice control circuit for controlling the microphone 43 and the speaker 44, and a touch panel control circuit for controlling the touch panel 13. The voice control circuit not only performs A/D conversion or D/A conversion on the voice signal, but also converts the voice signal into voice data of a predetermined format. The touch panel 13 used in this embodiment is a touch panel of a resistance-film type. However, the touch panel 13 is not limited to the resistance-film type, but may be a touch panel of any other pressing type such as capacitance type. The touch panel control circuit generates coordinates of the touched position of the touch panel 13 in a predetermined format, based on a signal from the touch panel 13, and outputs the generated coordinates to the information processing unit 31. The information processing unit 31 is enabled to know the touched position on the touch panel 13 where the input is performed, by acquiring the touched position data.

The operation button 14 is connected to the information processing unit 31 and outputs operation data indicating an input status of each of the operation buttons 14A to 14E (whether or not the operation button has been pressed) to the information processing unit 31. The information processing unit 31 performs processing according to an input to the operation button 14 by acquiring the operation data from the operation button 14.

The lower LCD 12 and the upper LCD 22 are connected to the information processing unit 31. The lower LCD 12 and the upper LCD 22 display an image according to instructions from the information processing unit 31 (GPU 312). The lower LCD 12 is a display device displaying an image in a planar manner (not in a stereoscopically viewable manner). The number of pixels of the lower LCD 12 is 320 × 240 dots (horizontal × vertical), for example. Although this embodiment uses a LCD as the display device, other display device such as those utilizing EL (Electro Luminescence) may be used. Further, a display device having a desired resolution may be used as the lower LCD 12.

The upper LCD 22 is a display device capable of displaying an image which is stereoscopically viewable with unaided eyes. The upper LCD 22 may be a LCD of a reticular type or a parallax barrier type configured such that an image for left eye and an image for right eye are seen by the left and right eyes, respectively and separately. The number of pixels of the upper LCD 22 is 800 × 240 dots (horizontal × vertical), for example. In this embodiment, the upper LCD 22 is described as being a liquid crystal display device. However, the upper LCD 22 is not limited to this, but may be a display device using EL, for example. Further, a display device having any resolution can be used as the upper LCD 22.

The outside imaging units 23 and the inside imaging unit 24 are connected to the information processing unit 31. The outside imaging units 23 and the inside imaging unit 24 take an image according to instructions from the information processing unit 31, and outputs the taken image data to the information processing unit 31.

The inside imaging unit 24 includes an imaging element with a predetermined resolution, and a lens. The imaging element may be a CCD image sensor or a CMOS image sensor, for example. The lens may be one having a zoom mechanism.

The outside left imaging unit 23a and the outside right imaging unit 23b each include an imaging element having a predetermined and common resolution (e.g. a CCD image sensor or a CMOS image sensor), and a lens. The lens may be one having a zoom mechanism. The outside left imaging unit 23a and the outside right imaging unit 23b are configured such that one of these outside imaging units (the outside left imaging unit 23a and the outside right imaging unit 23b) can be used independently by means of the program executed by the game device 1. Description of this embodiment will be made on the assumption that only one of the outside imaging units is used.

The 3D adjustment switch 25 is connected to the information processing unit 31. The 3D adjustment switch 25 transmits an electric signal according to a position of a slider to the information processing unit 31.

### <Outline of Functions>

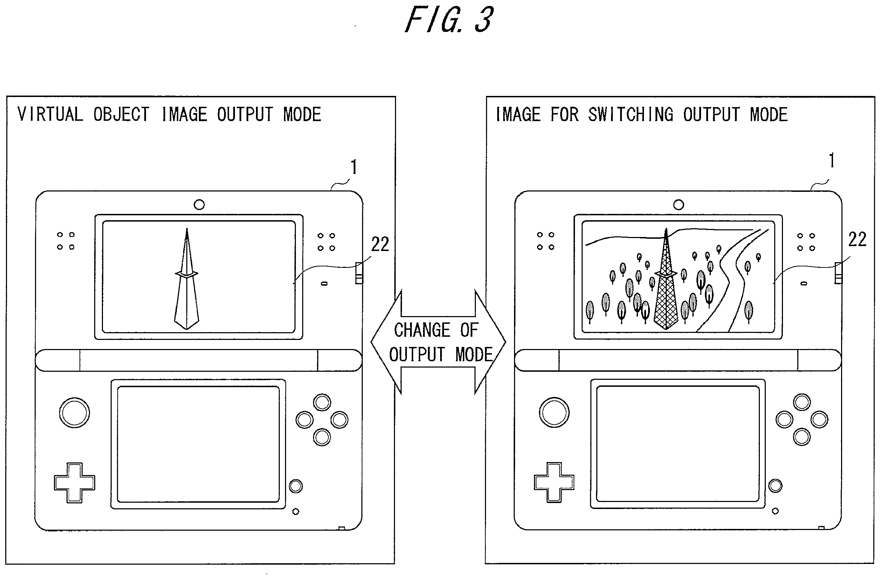

FIG. 3 is a diagram illustrating an outline of an object image display function provided to a user through the game device according to the embodiment. The game device 1 has a display 22 (upper LCD 22) and has an object image display function to display, on this display 22, a virtual object image generated by rendering a virtual object in a virtual space with the use of a virtual camera. In this embodiment, the virtual object is data representing the appearance of a predetermined object to be displayed (a radio tower in the example shown in FIG. 3) by converting (modeling) the object to be displayed into a virtual object using polygons and textures. It should be understood that if the object to be displayed is an object actually existing in the real world, a virtual object of the object to be displayed can be generated by using, for example, a 3D scanner.

The predetermined object to be displayed is an object having an appearance viewable to a user, and can be exemplified by an art work, a building, a product, a person, and an animal. However, the object to be displayed is not limited to those mentioned in the above. Further, the object to be displayed may be an object actually existing in the real world, or may be an object not existing in the real world (for example, an imaginary art work, building, product, person, or animal appearing in a work of fiction or a game) .

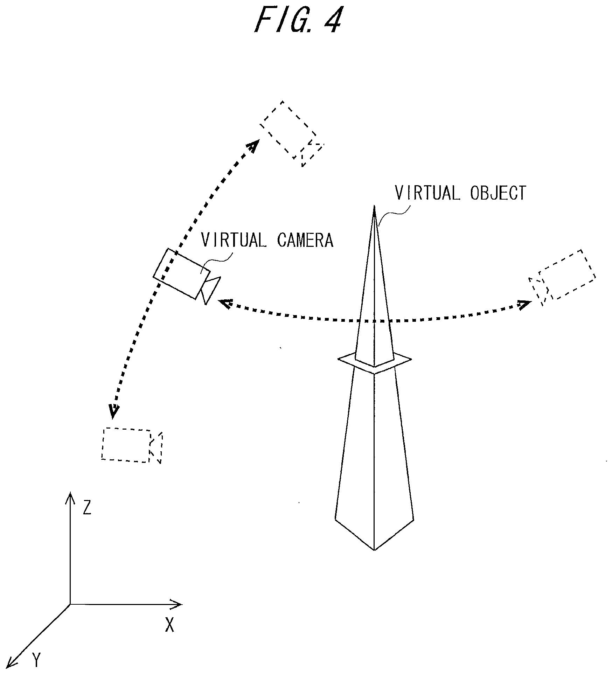

FIG. 4 is a diagram illustrating a relationship between a virtual object and a virtual camera disposed in a virtual space in this embodiment. The game device 1 according to the embodiment renders the virtual object, the position and attitude of which are determined according to the coordinate system of the virtual space, from the viewpoint of the virtual camera also arranged in the virtual space, and outputs the rendered image to the display 22. The game device 1 according to the embodiment is configured such that the position and attitude of the virtual camera used for rendering are variable, whereby the user is allowed to observe the object to be displayed from various angles and positions.

Specifically, in the game device 1 according to the embodiment, the user can update or set the position of the virtual camera, by performing operation to control the position of the virtual camera, so that the virtual camera circles around, or moves close to or away from the virtual object. The object image display function provided by this embodiment principally aims at enabling the user to observe a predetermined object to be displayed. Therefore, the virtual camera in this embodiment moves such that its imaging direction (visual axis) is always oriented toward the virtual object (such that the virtual object is always situated within the imageable range of the virtual camera) even if the position is changed. However, in some other embodiments, the imaging direction of the virtual camera may be deviated from the direction toward the virtual object.

Description will be made of switching of the image output mode according to this embodiment. When performing the processing to enable observation of the object to be displayed, the game device 1 according to this embodiment generally causes the display 22 to display the virtual object image generated by real-time rendering the virtual object with the use of the virtual camera, as described with reference to FIG. 4. Hereafter, the output mode to output a virtual object image to the display 22 shall be referred to as the "virtual object image output mode".

When the shooting angle and the shooting position of the viewpoint (virtual camera) observing the virtual object satisfy predetermined switching conditions in the virtual object image output mode, the game device 1 switches the output mode so that the image to be observed by the user is switched to an image preliminarily obtained by actually imaging a predetermined object to be displayed existing in the real world with the use of a real camera (hereafter, referred to as the "image for switching"). Hereafter, the output mode to output the image for switching to the display 22 shall be referred to as the "image for switching output mode".

However, the image for switching need not necessarily be an image obtained by actually imaging an object to be displayed with the use of a real camera. The image for switching may be, for example, a high-definition image generated by preliminarily rendering a high-precision virtual object modeled with a higher precision (for example, with a greater number of polygons and a higher resolution texture) than a virtual object which is used for real-time rendering in order to allow the user to observe the object to be displayed from various directions. Since the predetermined object to be displayed may be an unreal object, s mentioned before, it is useful to use a rendering image of such a high-precision virtual object when preparing an image for switching of an unreal object to be displayed.

Specifically, the game device 1 according to this embodiment has at least two different output modes: the "virtual object image output mode" and the "image for switching output mode", so that when an image relating to the same object to be displayed is to be output to the display 22, the image to be output is switched from the virtual object image to the image for switching at a certain angle. The game device 1 according to this embodiment is thus able to allow the user to observe the object from various directions, and also to allow the user to observe an more appropriate image from a specific viewpoint.

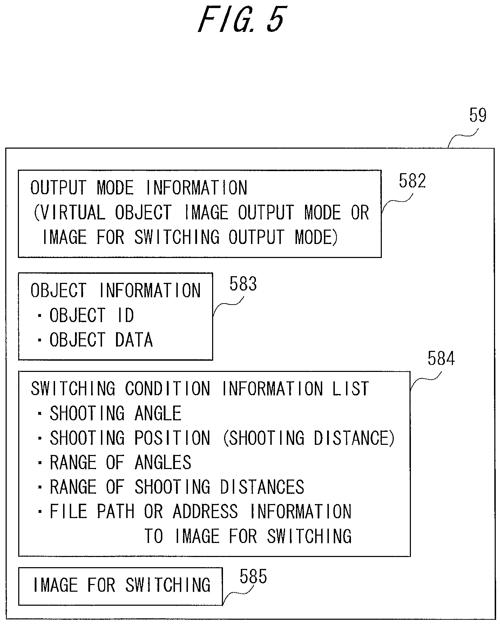

FIG. 5 is a diagram illustrating information held by the game device 1 according to this embodiment. The game device 1 holds output mode information 582, object information 583, a switching condition information list 584, and an image for switching 585. These items of information are held in a storage unit 59 to be described later.

The output mode information 582 is information indicating whether the current output mode is the virtual object image output mode or the image for switching output mode. In this embodiment, the default of the output mode information 582 is the virtual object image output mode.

The object information 583 is information relating to a virtual object. The object information 583 contains, for example, an object ID and object data for identifying the virtual object. The object data includes, in addition to data on polygons and textures forming the object, information indicating the position and attitude of the virtual object in the coordinate system of the virtual space. The object information 583 is provided for each of the objects used in the game device 1.

The switching condition information list 584 is a list (table) which holds switching condition information containing switching conditions to be satisfied when the output mode is switched from the virtual object image output mode to the image for switching output mode. The switching condition information list 584 holds a plurality of items of switching condition information. The switching condition information includes, as the switching conditions, a shooting angle and shooting position (shooting distance), a range of angles and a range of shooting distances that are determined to satisfy the switching conditions. The switching condition information further includes information from which an image for switching obtained by imaging the object to be displayed from a position corresponding to the shooting angle and shooting position that are determined to satisfy the switching conditions can be acquired (e.g. file path to the image for switching and address information). In this embodiment, it is determined whether or not the shooting position is within a predetermined range by determining whether or not the distance from the virtual object to the virtual camera (shooting distance) is within the predetermined range.

The image for switching 585 is an image obtained by preliminarily imaging a predetermined object to be displayed with a real camera. However, as mentioned before, the image for switching need not necessarily be an image by preliminarily actually imaging the object to be displayed with a real camera. The image for switching may be, for example, an image obtained by rendering a high-precision virtual object. An image which is imaged from a shooting angle and shooting position corresponding to the switching conditions is preliminarily prepared, as the image for switching, for each item of switching condition information held in the switching condition information list 584.

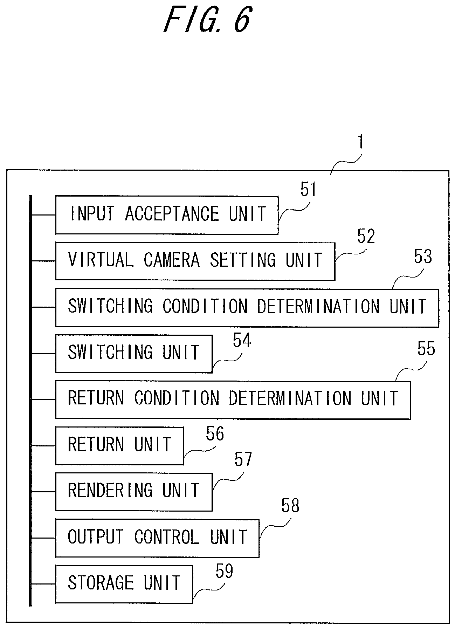

FIG. 6 is a functional block diagram of the game device 1 according to this embodiment. The functional blocks shown in FIG. 6 are some of the functions implemented by the information processing unit 31 (the CPU 311 and the GPU 312) reading, for example, a program stored in the external memory 45.

By executing the program, the game device 1 operates as an information processing apparatus having an input accepting unit 51, a virtual camera setting unit 52, a switching condition determination unit 53, a switching unit 54, a return condition determination unit 55, a return unit 56, a rendering unit 57, an output control unit 58, and a storage unit 59.

The rendering unit 57 renders a virtual object image by setting a position and attitude of a virtual camera arranged in a virtual space and generating an image of a virtual object as viewed by the virtual camera (in other words, the virtual object is imaged by the virtual camera) . More specifically, the rendering unit 57 performs the rendering by converting the virtual object from the coordinate system of the virtual space into the coordinate system of the virtual camera, and further converting into the planar coordinate system of imaged image.

The input accepting unit 51 accepts an input based on a user's operation. Types of operations accepted by the input accepting unit 51 include, for example, revolving the virtual camera with the cross button 14A or the analog stick 15, moving the virtual camera back and forth with the button 14D or 14E, and instructing termination of the image for switching output mode with the button 14C.

The virtual camera setting unit 52 sets parameters for the virtual camera so that the virtual object is located within the imageable range of the virtual camera. The parameters for the virtual camera include position of the virtual camera in the coordinate system of the virtual space, direction of the visual axis, and angle of view of the virtual camera. The virtual camera setting unit 52 normally sets the parameters according to the input accepted by the input accepting unit 51.

However, when it is determined by the switching condition determination unit 53 that the switching conditions are satisfied, the virtual camera setting unit 52 sets the parameters so that the shooting angle and shooting position of the virtual camera relative to the virtual object gradually vary toward the shooting angle and shooting position corresponding to those of the image for switching.

The switching condition determination unit 53 determines whether or not the shooting angle and shooting position of the virtual camera relative to the virtual object have satisfied any of the plurality of switching conditions contained in the switching condition information list 584 while the output mode is the virtual object image output mode. Although, in this embodiment, the shooting angle and shooting position of the virtual camera relative to the virtual object are used as the switching conditions, only the shooting angle may be used as the switching condition in some other embodiments.

When it is determined that the switching conditions are satisfied by the switching condition determination unit 53, the switching unit 54 switches the output image to be output to the display 22 from the virtual object image rendered by the rendering unit 57 to the image for switching which has been preliminarily obtained by imaging the object to be displayed from the shooting angle and shooting position corresponding to the switching conditions. Specifically, the switching unit 54 switches the output image to an image for switching that is associated with the switching conditions determined to be satisfied, by selecting the image for switching from the plurality of images for switching designated in the switching condition information list 584. At the same time with the switching of the output image, the switching unit 54 also switches the output mode from the virtual object image output mode to the image for switching output mode.

The return condition determination unit 55 determines whether or not a predetermined return condition has been satisfied in the state in which the output image is switched to the image for switching (in the image for switching output mode). This embodiment employs, as a return condition, the fact that "the input accepting unit 51 has accepted a predetermined input for instructing termination of the image for switching output mode". The predetermined input for instructing termination of the image for switching output mode may be performed, for example, by pressing of the button 14C. However, in other embodiments, other return conditions may be employed, for example, the condition that "the display range of the display 22 has reached an end of the image for switching" or that "the shooting angle and shooting position of the virtual camera do not satisfy the switching conditions any more" as a result of the user's operation of the buttons 14A to 14E and the analog stick 15.

When the return condition determination unit 55 determines that the predetermined return conditions have been satisfied, the return unit 56 returns the output image to the virtual object image rendered by the rendering unit 57. In association with the switching of the output image, the return unit 56 switches the output mode from the image for switching output mode to the virtual object image output mode.

The output control unit 58 outputs the virtual object image or the image for switching to the display 22 and causes the display 22 to display the image thus output according to what output mode is currently set.

The storage unit 59 stores not only the output mode information 582, the object information 583, the switching condition information list 584, and the image for switching 585 as described with reference to FIG. 5, but also various types of data required to perform the processing.

### <Flow of Processing>

A flow of processing performed in this embodiment will be described. It should be understood that the specific particulars and sequence of processing steps shown in the flowchart according to this embodiment are only an example of various possible embodiments of the invention. Specific particulars and sequence of processing steps may be selected as required according to an embodiment of the invention.

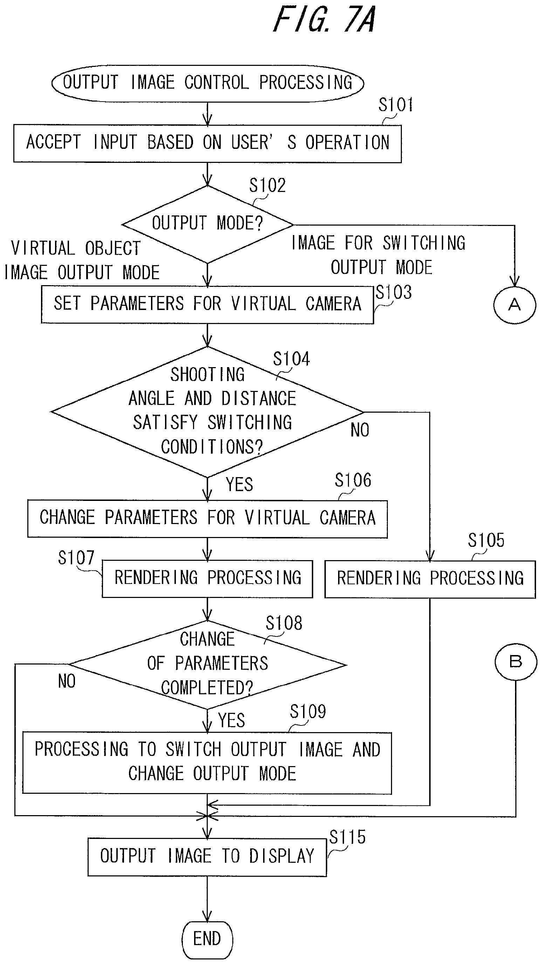

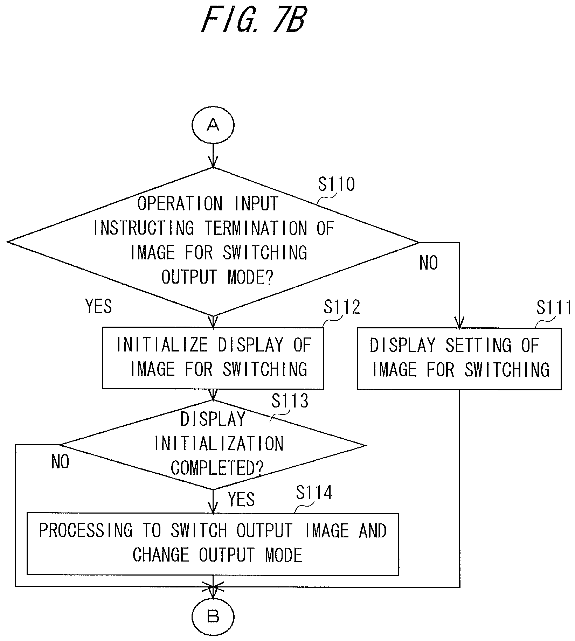

FIG. 7A and FIG. 7B are flowcharts illustrating a flow of output image control processing according to this embodiment. The output image control processing shown in these flowcharts is repeatedly performed in units of frames divided by 60 frames per second.

An input based on the user's operation is accepted in step S101. The input accepting unit 51 accepts an input based on the user's operation through the operation buttons 14A to 14E and the analog stick 15. Particulars of the processing according to the user's operation will be described later. The processing then proceedsto step S102.

In step S102, the output mode is determined. The output control unit 58 determines whether the current output mode is the virtual object image output mode or the image for switching output mode by referring to the output mode information 582. In other words, the output control unit 58 determines whether the image currently displayed on the display 22 is a virtual object image generated by real-time rendering a virtual object with the virtual camera, or an image for switching 585 preliminarily prepared (in this embodiment, an image generated by actually imaging the object to be displayed) . If the current output mode is determined to be the virtual object image output mode, the processing proceeds to step S103. In contrast, if the current output mode is determined to be the image for switching output mode, the processing proceeds to step S110.

Firstly, description will be made of the flow of processing when the current output mode is determined to be the virtual object image output mode in step S102.

In step S103, parameters (set values) are set for the virtual camera. The virtual camera setting unit 52 sets (updates) parameters for the virtual camera according to the content of the input based on the user's operation accepted in step S101. As described above, the imaging direction (visual axis) of the virtual camera is oriented toward the virtual object even when the position of the virtual camera is changed. This means that the imaging direction of the virtual camera is updated or set in association with the change of the position of the virtual camera, such that the imaging direction is not deflected from the direction of the virtual object.

For example, in this embodiment, the virtual camera is able to circle around the virtual object with its imaging direction oriented to the virtual object. The user is thus enabled, by manipulating the cross button 14A or the analog stick 15, to move the virtual camera sideways and up and down so that the virtual camera circles around the virtual object. The distance between the virtual object and the virtual camera will not be changed by this operation alone. This means that the user can adjust the shooting angle of the virtual camera relative to the virtual object by manipulating the cross button 14A or the analog stick 15.

The user can move the virtual camera back and forth so as to change the distance between the virtual camera and the virtual object, by pressing the button 14D or 14E. The shooting angle of the virtual camera relative to the virtual object is not changed by this operation alone. This means that, the user can adjust the shooting position (shooting distance) of the virtual camera relative to the virtual object by manipulating the button 14D or 14E.

This means that the virtual camera setting unit 52 updates or sets the position of the virtual camera indicated by the coordinate system of the virtual space such that the virtual camera circles around the virtual object according to the input accepted as a result of a manipulation of the cross button 14A or the analog stick 15. In addition, the virtual camera setting unit 52 updates or sets the position of the virtual camera indicated by the coordinate system of the virtual space such that the virtual camera moves closer to or away from the virtual object according to the input accepted as a result of a manipulation of the button 14D or 14E. After that, the processing proceeds to step S104.

In step S104, it is determined whether or not the shooting angle and shooting position of the virtual camera relative to the virtual object have satisfied the switching conditions. The switching condition determination unit 53 determines whether or not the switching conditions have been satisfied by determining whether or not the shooting angle and shooting position of the virtual camera relative to the virtual object, which are determined according to the parameters set in step S103, have become within the predetermined range.

More specifically, the switching condition determination unit 53 calculates a shooting angle of the virtual camera relative to the virtual object based on the attitude of the virtual object in the coordinate system of the virtual space and the attitude of the visual axis of the virtual camera indicated by the parameter of the virtual camera. The shooting angle can be represented, for example, as a difference between a reference vector indicating the attitude of the virtual object in the coordinate system of the virtual space and a vector indicating the visual axis of the virtual camera. Once the shooting angle of the virtual camera is calculated, the switching condition determination unit 53 compares the calculated shooting angle with the shooting angle preliminarily set in the switching condition information list. When a difference between the calculated shooting angle of the virtual camera and the shooting angle preliminarily set in the switching condition information list is within a predetermined angle defined in the switching condition information list, the switching condition determination unit 53 determines that the shooting angle of the virtual camera relative to the virtual object is within the predetermined range.

The switching condition determination unit 53 also calculates a distance from the virtual object to the virtual camera based on the position of the virtual object in the coordinate system of the virtual space and the position of the virtual camera indicated by the parameter of the virtual camera. Once the distance is calculated, the switching condition determination unit 53 compares the calculated distance with the distance preliminarily set in the switching condition information list. The switching condition determination unit 53 determines that the shooting position of the virtual camera relative to the virtual object is within the predetermined range defined in the switching condition information list when a difference between the calculated distance of the virtual camera and the distance preliminarily set in the switching condition information list is within the predetermined range.

When the switching condition determination unit 53 determines that the shooting angle and shooting position of the virtual camera relative to the virtual object are within the predetermined range and thus the switching conditions are satisfied, the processing proceeds to step S106. In contrast, when the switching condition determination unit 53 determines that the shooting angle and shooting position of the virtual camera relative to the virtual object are not within the predetermined range and thus the switching conditions are not satisfied, the processing proceeds to step S105.

In step S105, processing to render the virtual object is performed. The rendering unit 57 renders an virtual object image by imaging the virtual object with the virtual camera arranged in the virtual space according to the parameters set in step S103. Once the virtual object image is rendered, the processing proceeds to step S115.

During the processing from step S106 to step S108, the parameters for the virtual camera are changed until the shooting angle and shooting position of the virtual camera relative to the virtual object become identical or close to the shooting angle and shooting position of the image for switching 585. If it is determined in step S104 that the switching conditions are satisfied, the virtual camera setting unit 52 sets the parameters for the virtual camera such that the shooting angle and shooting position of the virtual camera relative to the virtual object are changed gradually, frame by frame, toward the shooting angle and shooting position corresponding to those of the image for switching 585 (step S106) . The rendering unit 57 then renders the virtual object image by imaging the virtual object with the virtual camera arranged in the virtual space according to the parameters set in step S106 (step S107).

The image for switching 585 is generated by imaging a predetermined object to be displayed from a certain shooting angle and shooting position. Therefore, if the switching conditions are broad to some extent, the shooting angle and shooting position of the virtual object image may possibly differ from those of the image for switching 585. If the virtual object image is switched to the image for switching 585 directly in this situation, it is difficult to give realistic feeling to the user during switching. According to this embodiment, therefore, the parameters for the virtual camera are changed before the output image is switched from the virtual object image to the image for switching 585, so that the shooting angle and shooting position of the virtual object image become identical or close to the shooting angle and shooting position of the image for switching 585 (to such an extent that the user will not feel discomfort or strangeness).

The change of the parameters in step S106 is performed over a plurality of frames until the shooting angle and shooting position of the virtual camera relative to the virtual object become identical or close to those of the image for switching 585 (step S108) . This means that, since the adjustment of the parameters is performed over a plurality of frames, the virtual object image is rendered and displayed also while the parameters are being changed. When it is mentioned here that the shooting angle and shooting position of the virtual camera relative to the virtual object become close to those of the image for switching 585, it means that a difference between the shooting angle and shooting position of the virtual camera relative to the virtual object and those of the image for switching 585 becomes a predetermined threshold or less. This threshold is preferably set to such a value that the virtual object image and the image for switching approximate to each other to such an extent that the user will not feel discomfort or strangeness during switching from the virtual object image to the image for switching 585. When it is determined that the shooting angle and shooting position of the virtual camera relative to the virtual object has become identical or close to the shooting angle and shooting position of the image for switching 585, the processing proceeds to step S109.

Although, in this embodiment, the rendered virtual object image is approximated to the image for switching 585 by adjusting the virtual camera, this method may be replaced with another method, in which the display position and size of the image for switching 585 during the switching may be adjusted to approximate those of the virtual object image so that improved realistic feeling can be given to the user during the switching. Further, the processing steps shown in step S106 and step S108 may be omitted, and the switching may be performed without performing the adjustment as described above.

In step S109, processing to switch the output image and change of the output mode are performed. When it is determined in step S104 that the switching conditions have been satisfied and it is determined in step S108 that the adjustment of the shooting angle and shooting position of the virtual camera relative to the virtual object has been completed, the switching unit 54 acquires an image for switching 585 corresponding to the switching conditions which are determined to have been satisfied in step S104. The switching unit 54 then switches the output image to be output. to the display 22 from the virtual object image to the acquired image for switching 585. The switching unit 54 acquires the corresponding image for switching 585 by referring to information enabling acquisition of the image for switching 585 (information on file path to or address of the image for switching 585) associated with the switching conditions which are determined to have been satisfied in step S104, and accessing this file or address.

In this embodiment, the output image switching processing is performed over a plurality of frames, in association with a visual effect in which fade-out of the virtual object image and fade-in of the image for switching 585 occur simultaneously. Specifically, according to this embodiment, a composite image of the virtual object image and the image for switching 585 is generated and this composite image is output for a preset period of frames required for the switching in order to provide the fade-in/fade-out effect. This composite image can be generated by using a so-called alpha blending technique. Specifically, the fade-in/fade-out effect can be obtained by synthesizing the virtual object image and the image for switching 585 used for the composite image while gradually changing their degrees of transparency.

Although the description of this embodiment has been made in terms of the case in which the fade-in/fade-out effect is used during switching of the output image, the switching of the output image may be performed in association with another effect. For example, one or several frames of white screen or black screen may be inserted between the output image before switching and the output image after the switching in order to alleviate the feeling of strangeness that the user may feel. It is also possible to switch the output image without accompanying any effect.

Upon completing the output image switching processing over a plurality of frames, the switching unit 54 changes the output mode indicated by the output mode information 582 from the virtual object image output mode to the image for switching output mode. After that, the processing proceeds to step S115, in which there is displayed on the display 22 the image for switching 585 that is obtained by imaging the object to be displayed from the shooting angle and shooting position indicated by the switching conditions.

Next, description will be made of a flow of processing when it is determined in step S102 that the current output mode is the image for switching output mode.

In step S110, it is determined whether or not an input of an operation to instruct termination of the image for switching output mode has been accepted. The return condition determination unit 55 determines whether or not the input accepted in step S101 contains an input of an operation to instruct termination of the image for switching output mode. For example, pressing of the button 14C may be set as the operation to instruct termination of the image for switching output mode. When it is determined that an input of the operation to instruct termination of the image for switching output mode has been accepted, the processing proceeds to step S112. In contrast, when it is determined that no input of the operation to instruct termination of the image for switching output mode has been accepted, the processing proceeds to step Sill.

In step Sill, a display position and display size of the image for switching 585 are set. The output control unit 58 sets (updates) the display position and display size of the image for switching 585 according to the content of the input based on the user's operation accepted in step S101. For example, in this embodiment, upon accepting the user's operation of the cross button 14A or the analog stick 15, the output control unit 58 changes the display position of the image for switching 585 according to the content of the user's operation. Upon accepting the user's operation to press the button 14D or 14E, the output control unit 58 enlarges or reduces the display size of the image for switching 585 according to the pressed button. After that, the processing proceeds to step S115.

In steps S112 and S113, the display position and display size of the image for switching 585 are changed until the display position and display size of the image for switching 585 return to their initial position and size. In response to the determination that an input of the operation to instruct termination of the image for switching output mode has been accepted in step S110, the output control unit 58 sets the display position and display size such that they are gradually changed toward the initial display position and initial display size at the time when the switching to the image for switching 585 is performed (see step S109) (step S112). This makes it possible to perform switching when the output image is returned to the virtual object image after the display of the image for switching 585, in step S114 to be described later, without causing the user to feel strangeness.

The change of the display position and display size of the image for switching 585 in step S112 is performed until the display position and display size of the image for switching 585 return to the initial display position and initial display size when switching to the image for switching 585 was performed (see step S109) (step S113).

The processing described in relation to steps S112 and S113 is processing to be performed only when the display position and display size of the image for switching 585 have been changed from their initial display position and initial display size by the processing of step Sill or the like. When the display position and display size of the image for switching 585 have not been changed from their initial display position and initial display size, the processing in steps S112 and S113 need not be performed. When it is determined that the display position and display size of the image for switching 585 have returned to their initial position and size, the processing proceeds to step S114.

According to this embodiment, as described above, the image for switching 585 is approximated to the virtual object image by adjusting the image for switching 585. However, instead of this method, an alternative method may be employed in which the shooting angle and shooting position of the virtual camera after the switching are set to such a shooting angle and shooting position that a virtual object image can be obtained with a shooting angle and shooting position which are identical or close to the display position and display size of the image for switching 585 at the time when an input of the operation to instruct termination of the image for switching output mode was accepted. This method is also able to improve the realistic feeling given to the user during the switching.

In step S114, switching processing of the output image and change of the output mode are performed. When it is determined that an input of the operation to instruct termination of the image for switching output mode has been accepted in step S110, and it is determined that adjustment of the display position and display size of the image for switching 585 has been completed in step S112, the return unit 56 switches the output image to be output to the display 22 from the image for switching 585 to the virtual object image.

Like the output image switching processing described in relation to step S109, the output image switching processing according to this embodiment is performed over a plurality of frames in association with a visual effect in which fade-out of the image for switching 585 and fade-in of the virtual object image occur simultaneously. Since particulars of the switching processing using the fade-in/fade-out effect are substantially the same as those of the output image switching processing described in relation to step S109, description thereof will be omitted.

Once the output image switching processing performed over the plurality of frames has been completed, the return unit 56 changes the output mode indicated by the output mode information 582 from the image for switching output mode to the virtual object image output mode. After that, the processing proceeds to step S115, and the display 22 is caused to display a virtual object image which is generated by real-time rendering the virtual object with the virtual camera.

In step S115, an output image is output to the display 22. When the display mode is the virtual object image output mode, the output control unit 58 outputs a virtual object image to the display 22 as the output image. In contrast, when the display mode is the image for switching output mode, the output control unit 58 outputs the image for switching 585, the display position and display size of which are adjusted to those set in step S111, to the display 22 as the output image. However, as described above in relation to step S109, the output control unit 58 outputs a composite image of the virtual object image and the image for switching 585 during switching of the output image.

The processing shown in this flowchart is then terminated. The output image control processing shown in this flowchart is, as described above, performed in units of frames divided by 60 frames per second. Therefore, according to the output image control processing shown in the flowchart, an input based on the user's operation is determined for each of the frames, and either the virtual object image or the image for switching 585 is displayed based on the content of the operation. The user is able to observe the object to be displayed from various angles and positions by manipulating, for example, the operation buttons 14A to 14E and the analog stick 15. Further, the user is able to observe the object to be displayed with a high-definition image (image for switching 585) with a higher degree of reality within a predetermined range of angles and positions.

### <Variations of the Embodiment>

Variations of the embodiment will be described.

In the processing to change the parameters for the virtual camera before the switching from the virtual object image to the image for switching 585 described in relation to step S106 of FIG. 7A, not only the parameter for the virtual camera but also parameters relating to at least any of position, intensity and orientation relative to the virtual object of a light (light source) arranged in the virtual space may be changed. In this case, the parameters for the light arranged in the virtual space are changed so as to approximate (or match) the conditions of the light source when the image for switching 585 was imaged. This makes it possible, during the switching, that colors of the virtual object image and the image for switching 585 are changed to become close to each other at the same time with the silhouette of the virtual object image overlapping with the silhouette of the image for switching 585.

Although, in this embodiment, the virtual object image and the image for switching 585 are output and displayed as planar images (two-dimensional images) displayed in a planar manner, the virtual object image and the image for switching 585 may be output and displayed as stereoscopically viewable images in another embodiment.

Specifically, in the virtual object image output mode, the rendering unit 57 generates a virtual object image that is stereoscopically viewable by rendering with two stereo-imaging virtual cameras, and the output control unit 58 outputs this stereoscopically viewable virtual object image thus rendered. In the image for switching output mode, the output control unit 58 outputs a stereoscopically viewable image for switching 585 obtained by imaging with two stereo-imaging virtual cameras. As described before, the display mode of the game device 1 can be switched between the planar display mode and the stereoscopic display mode by means of the 3D adjustment switch 25. Therefore, in the output image control processing according to this invention as well, the image to be output can be switched between a planar image and a stereoscopic image according to the state of the 3D adjustment switch 25.

When the virtual object image and the image for switching 585 are to be output and displayed as a stereoscopically viewable image, additional parameters relating the degree of stereoscopic effect (e.g. distance between two cameras and relative imaging directions thereof) may be changed as the parameters for the virtual camera in the processing to change the parameters for the virtual camera before the switching from the virtual object image to the image for switching 585 as described in relation to step S106 of FIG. 7A. In this case, the parameters for the virtual camera are changed to approximate (or match) the conditions for determining the degree of stereoscopic effect such as a distance between the two cameras and relative imaging directions thereof when the image for switching 585 was imaged. In this manner, the realistic feeling that the user may feel during the switching can be improved by matching the degree of stereoscopic effect of the virtual object image with the degree of stereoscopic effect of the image for switching 585 (or by approximating them to such an extent that no feeling of strangeness or discomfort is given to the user) .

Although the description of this embodiment has been made in terms of the case in which parameters for the virtual camera are set (updated) based on the user's operation, the parameters for the virtual camera may be set (updated) based on a factor other than the user's operation. For example, when the object image display function according to this invention is provided as a part of a game, the parameters for the virtual camera may be set (updated) based on not only the user's operation but also a state of progress of the game.

The user's operation is not limited to the operation using the operation buttons 14A to 14E and the analog stick 15 as described above. For example, the configuration may be such that the user's operation to tilt or move the game device 1 is detected by the acceleration sensor 39 and the angular rate sensor 40, and the parameters for the virtual camera are set (renewed) according to inputs accepted from these sensors.

Although the description of the embodiment has been made of a case in which the virtual object image or the image for switching 585 is output to the display 22 to be displayed thereby, the display device to which the image is output is not limited to the display 22. For example, in the case of a game device having a plurality of displays like the game device 1 according to this embodiment, at least one of these displays is caused to display the image. This means that the virtual object image and the image for switching 585 may be output to either the display 12 (lower LCD 12) only or both of the displays 12 and 22.

### <Advantageous Effects of the Invention>

According to this embodiment, the user is allowed to observe an object to be displayed from various directions and positions by real-time rendering a virtual object mimicking the object to be displayed in normal mode, whereas when the object is to be observed from a predetermined range of shooting angles and shooting positions, the user is allowed to observe the object from various direction with improved realistic feeling by displaying a high-definition image with a high degree of realty.

The modeling accuracy of a virtual object (e.g. a number of polygons forming the virtual object or texture resolution) is limited by a capacity of a processing apparatus or a response speed required for the processing apparatus. According to this embodiment, however, the accuracy of the virtual object used in real-time rendering is determined according to the capacity of the processing apparatus or the response speed required for the processing apparatus, whereas when the object is to be observed within a range of the predetermined shooting angle and shooting positions that is recommendable to the user, it is possible to allow the user to observe a high-definition image with a high degree of realty.

Further, this invention is particularly useful when it is desired to allow a user to observe an object which is difficult to observe from the user's desired angle or position, such as an object at a high altitude or a huge object. It is often difficult to actually scan such an object. According to this invention, however, a virtual object can be modeled, for example, based on a miniature of an object, and an image obtained by imaging a real object from a predetermined shooting angle and shooting position is used as the image for switching 585. This means that, it is made possible for the user to observe the object from his/her desired angle and position by real-time rendering the virtual object based on the miniature of the object. Furthermore, it is possible to allow the user to view the image for switching 585 obtained by imaging the real object when the shooting angle and shooting position are those recommendable to the user.

## Claims

1. A program for causing a computer connected to a display device to function as:
rendering means for rendering a virtual object image by imaging a virtual object arranged in a virtual space and representing the appearance of a predetermined object by means of a virtual camera arranged in the virtual space;
virtual camera setting means for setting a parameter for the virtual camera;
switching condition determination means for determining that a predetermined switching condition has been satisfied when a shooting angle of the virtual camera relative to the virtual object determined according to the parameter becomes within a predetermined range;
**characterized in that** the computer is further caused to function as:
output control means for selectively outputting, to the display device, either the virtual object image rendered by the rendering means or an image for switching preliminarily obtained by imaging the predetermined object from a shooting angle corresponding to the predetermined range, the shooting angle being identical or substantially identical to the shooting angle of the virtual camera relative to the virtual object; and
switching means for switching the output image to be output by the output control means from the virtual object image to the image for switching, when the switching condition determination means determines that the switching condition has been satisfied,
wherein the image for switching is retrieved from a storage unit; and
wherein the image for switching is an image obtained by preliminarily rendering a higher-precision virtual object of the predetermined object which is modeled with a higher precision than the virtual object which is used for rendering the virtual object image.

2. The program according to claim 1, wherein the image for switching is an image obtained by preliminarily imaging a real entity of the predetermined object with a real camera.

3. The program according to any one of claims 1 to 2, wherein the switching condition determination means determines that the switching condition has been satisfied when a shooting angle and a shooting position of the virtual camera relative to the virtual object which are determined according to the parameter become within a predetermined range.

4. The program according to any one of claims 1 to 3, further causing the computer to function as:
return condition determination means for determining whether or not a predetermined return condition has been satisfied for returning the output image to the virtual object image rendered by the rendering means when in a state in which the output image is switched to the image for switching by the switching means; and
return means for returning the output image to the virtual object image rendered by the rendering means when the return condition determination means determines that the return condition has been satisfied.

5. The program according to any one of claims 1 to 4, wherein:
when the switching condition determination means determines that the switching condition has been satisfied, the virtual camera setting means sets the parameter, before the switching means switches the output image, such that the shooting angle of the virtual camera relative to the virtual object gradually changes toward a shooting angle corresponding to a shooting angle of the image for switching; and
the rendering means renders the virtual object image also during the change of the parameter.

6. The program according to any one of claims 1 to 4, wherein:
when the switching condition determination means determines that the switching condition has been satisfied, the virtual camera setting means sets the parameter, before the switching means switches the output image, such that the shooting angle and a shooting position of the virtual camera relative to the virtual object gradually change toward a shooting angle and a shooting position corresponding to a shooting angle and a shooting position of the image for switching; and
the rendering means renders the virtual object image also during the change of the parameter.

7. The program according to any one of claims 1 to 6, wherein:
the switching condition determination means determines whether or not any of a plurality switching conditions has been satisfied; and
when the switching condition determination means determines that any of the switching conditions has been satisfied, the switching means switches the output image to one of a plurality of images for switching that is associated with the switching condition which is determined to have been satisfied.

8. The program according to any one of claims 1 to 7, further causing the computer to function as input acceptance means for accepting an input based on a user's operation,
wherein the virtual camera setting means sets the parameter according to the input accepted by the input acceptance means.

9. The program according to any one of claims 1 to 8, wherein the virtual camera setting means sets the parameter such that the virtual object is positioned within a view range of the virtual camera.

10. The program according to any one of claims 1 to 9, wherein:
the rendering means renders two virtual object images in a stereoscopically viewable manner by imaging with two virtual cameras; and
the switching means switches the output image to be output to the display device from the two virtual object images rendered by the rendering means to two stereoscopically viewable images for switching.

11. An information processing apparatus connected to a display device, the information processing apparatus comprising:
rendering means for rendering a virtual object image by imaging a virtual object arranged in a virtual space and representing the appearance of a predetermined object by means of a virtual camera arranged in the virtual space;
virtual camera setting means for setting a parameter for the virtual camera;
switching condition determination means for determining that a predetermined switching condition has been satisfied when a shooting angle of the virtual camera relative to the virtual object determined according to the parameter becomes within a predetermined range;
**characterized in that** the information processing apparatus further comprises:
output control means for selectively outputting, to the display device, either the virtual object image rendered by the rendering means or an image for switching preliminarily obtained by imaging the predetermined object from a shooting angle corresponding to the predetermined range, the shooting angle being identical or substantially identical to the shooting angle of the virtual camera relative to the virtual object; and
switching means for switching the output image to be output by the output control means from the virtual object image to the image for switching, when the switching condition determination means determines that the switching condition has been satisfied,
wherein the image for switching is retrieved from a storage unit; and
wherein the image for switching is an image obtained by preliminarily rendering a higher-precision virtual object of the predetermined object which is modeled with a higher precision than the virtual object which is used for rendering the virtual object image.

12. An information processing system comprising:
a display device; and
an information processing apparatus connected to the display device and including:
rendering means for rendering a virtual object image by imaging a virtual object arranged in a virtual space and representing the appearance of a predetermined object by means of a virtual camera arranged in the virtual space;
virtual camera setting means for setting a parameter for the virtual camera;
switching condition determination means for determining that a predetermined switching condition has been satisfied when a shooting angle of the virtual camera relative to the virtual object determined according to the parameter becomes within a predetermined range;
**characterized in that** the information processing system further comprises:
output control means for selectively outputting, to the display device, either the virtual object image rendered by the rendering means or an image for switching preliminarily obtained by imaging the predetermined object from a shooting angle corresponding to the predetermined range, the shooting angle being identical or substantially identical to the shooting angle of the virtual camera relative to the virtual object; and
switching means for switching the output image to be output by the output control means from the virtual object image to the image for switching, when the switching condition determination means determines that the switching condition has been satisfied
wherein the image for switching is retrieved from a storage unit; and
wherein the image for switching is an image obtained by preliminarily rendering a higher-precision virtual object of the predetermined object which is modeled with a higher precision than the virtual object which is used for rendering the virtual object image.

13. An information processing method of causing a computer connected to a display device to execute:
a rendering step of rendering a virtual object image by imaging a virtual object arranged in a virtual space and representing the appearance of a predetermined object by means of a virtual camera arranged in the virtual space;
a virtual camera setting step of setting a parameter for the virtual camera;
a switching condition determination step of determining that a predetermined switching condition has been satisfied when a shooting angle of the virtual camera relative to the virtual object determined according to the parameter becomes within a predetermined range;
**characterized in that** the information processing method further causes the computer connected to a display device to execute: an output control step of selectively outputting, to the display device, either the virtual object image rendered in the rendering step or an image for switching preliminarily obtained by imaging the predetermined object from a shooting angle corresponding to the predetermined range, the shooting angle being identical or substantially identical to the shooting angle of the virtual camera relative to the virtual object; and
a switching step of switching the output image to be output in the output control step from the virtual object image to the image for switching when it is determined in the switching condition determination step that the switching condition has been satisfied
wherein the image for switching is retrieved from a storage unit; and
wherein the image for switching is an image obtained by preliminarily rendering a higher-precision virtual object of the predetermined object which is modeled with a higher precision than the virtual object which is used for rendering the virtual object image.

## Patentansprüche

1. Programm, das einen Computer, der an eine Anzeigevorrichtung angeschlossen ist, dazu veranlasst, zu arbeiten als:
Rendering-Mittel zum Rendern eines Bildes eines virtuellen Objekts durch Abbilden eines virtuellen Objekts, das in einem virtuellen Raum angeordnet ist und das Erscheinungsbild eines vorbestimmten Objekts darstellt, mittels einer in dem virtuellen Raum angeordneten virtuellen Kamera;
Einstellmittel für die virtuelle Kamera zum Einstellen eines Parameters für die virtuelle Kamera;
Umschaltbedingungs-Feststellungsmittel zum Feststellen, dass eine vorbestimmte Umschaltbedingung erfüllt ist, wenn ein Aufnahmewinkel der virtuellen Kamera relativ zu dem virtuellen Objekt, der gemäß dem Parameter festgestellt wird, innerhalb eines vorbestimmten Bereichs kommt;
**dadurch gekennzeichnet, dass** der Computer weiterhin veranlasst wird, zu arbeiten als:
Ausgabesteuermittel zum selektiven Ausgeben an die Anzeigevorrichtung entweder des von dem Rendering-Mittel gerenderten Bildes des virtuellen Objekts oder eines Umschaltbildes, das zuvor durch Abbilden des vorbestimmten Objekts aus einem Aufnahmewinkel erhalten wurde, der dem vorbestimmten Bereich entspricht, wobei der Aufnahmewinkel identisch oder im Wesentlichen identisch mit dem Aufnahmewinkel der virtuellen Kamera relativ zu dem virtuellen Objekt ist; und
Umschaltmittel zum Umschalten des vom Ausgabesteuermittel auszugebenden Ausgabebildes von dem Bild des virtuellen Objekts auf das Umschaltbild, wenn das Umschaltbedingungs-Feststellungsmittel feststellt, dass die Umschaltbedingung erfüllt ist,
worin das Umschaltbild aus einer Speichereinheit abgerufen wird; und
worin das Umschaltbild ein Bild ist, das durch vorheriges Rendern eines präziseren virtuellen Objekts des vorbestimmten Objekts erhalten wird, das mit einer höheren Präzision modelliert ist als das virtuelle Objekt, das zum Rendern des Bildes des virtuellen Objekts verwendet wird.

2. Programm nach Anspruch 1, worin das Umschaltbild ein Bild ist, das durch vorheriges Abbilden einer realen Entität des vorbestimmten Objekts mit einer realen Kamera erhalten wird.

3. Programm nach einem der Ansprüche 1 bis 2, worin das Umschaltbedingungs-Feststellungsmittel feststellt, dass die Umschaltbedingung erfüllt ist, wenn ein Aufnahmewinkel und eine Aufnahmeposition der virtuellen Kamera relativ zu dem virtuellen Objekt, die gemäß dem Parameter festgestellt werden, innerhalb eines vorbestimmten Bereichs liegen.

4. Programm nach einem der Ansprüche 1 bis 3, das weiterhin den Computer veranlasst, zu arbeiten als:
Rückführbedingungs-Feststellungsmittel zum Feststellen, ob eine vorbestimmte Rückführbedingung erfüllt wurde oder nicht, um das Ausgabebild zu dem durch das Rendering-Mittel gerenderte Bild des virtuellen Objekts zurückzuführen, wenn ein Zustand vorliegt, in dem das Ausgabebild durch das Umschaltmittel zu dem Umschaltbild umgeschaltet ist; und
Rückführmittel zum Rückführen des Ausgabebildes zu dem von dem Rendering-Mittel gerenderten Bild des virtuellen Objekts, wenn das Rückführbedingungs-Feststellungsmittel feststellt, dass die Rückführbedingung erfüllt wurde.

5. Programm nach einem der Ansprüche 1 bis 4, worin:
wenn das Umschaltbedingungs-Feststellungsmittel feststellt, dass die Umschaltbedingung erfüllt ist, das Einstellmittel für die virtuelle Kamera den Parameter einstellt, bevor das Umschaltmittel das Ausgabebild umschaltet, so dass sich der Aufnahmewinkel der virtuellen Kamera relativ zu dem virtuellen Objekt allmählich in Richtung eines Aufnahmewinkels ändert, der einem Aufnahmewinkel des Umschaltbildes entspricht; und
das Rendering-Mittel das Bild des virtuellen Objekts auch während der Änderung des Parameters rendert.

6. Programm nach einem der Ansprüche 1 bis 4, worin:
wenn das Umschaltbedingungs-Feststellungsmittel feststellt, dass die Umschaltbedingung erfüllt ist, das Einstellmittel für die virtuelle Kamera den Parameter einstellt, bevor das Umschaltmittel das Ausgabebild umschaltet, so dass sich der Aufnahmewinkel und eine Aufnahmeposition der virtuellen Kamera relativ zu dem virtuellen Objekt allmählich in Richtung eines Aufnahmewinkels und einer Aufnahmeposition ändern, die einem Aufnahmewinkel und einer Aufnahmeposition des Umschaltbildes entsprechen; und
das Rendering-Mittel das Bild des virtuellen Objekts auch während der Änderung des Parameters rendert.

7. Programm nach einem der Ansprüche 1 bis 6, worin:
das Umschaltbedingungs-Feststellungsmittel feststellt, ob eine von mehreren Umschaltbedingungen erfüllt ist oder nicht; und
wenn das Umschaltbedingungs-Feststellungsmittel feststellt, dass eine der Umschaltbedingungen erfüllt ist, schaltet die Umschalteinrichtung das Ausgabebild auf eines aus einer Vielzahl von Umschaltbildern um, das der Umschaltbedingung zugeordnet ist, für die festgestellt wurde, dass sie erfüllt ist.

8. Programm nach einem der Ansprüche 1 bis 7, wobei der Computer weiterhin als Eingabeannahmemittel zum Annehmen einer Eingabe auf der Grundlage einer Benutzerbedienung fungiert,
worin das Einstellmittel für die virtuelle Kamera den Parameter entsprechend der von dem Eingabeannahmemittel akzeptierten Eingabe einstellt.

9. Programm nach einem der Ansprüche 1 bis 8, worin das Einstellmittel für die virtuelle Kamera den Parameter so einstellt, dass das virtuelle Objekt in einem Sichtbereich der virtuellen Kamera positioniert ist.

10. Programm nach einem der Ansprüche 1 bis 9, worin:
das Rendering-Mittel zwei Bilder des virtuellen Objekts in einer stereoskopisch betrachtbaren Weise durch Abbildung mit zwei virtuellen Kameras rendert; und
das Umschaltmittel das an die Anzeigevorrichtung auszugebende Ausgabebild umschaltet von den beiden von dem Rendering-Mittel gerenderten Bildern des virtuellen Objekts auf zwei stereoskopisch darstellbare Bilder.

11. Informationsverarbeitungsvorrichtung, die mit einer Anzeigevorrichtung verbunden ist, wobei die Informationsverarbeitungsvorrichtung enthält:
Rendering-Mittel zum Rendern eines Bildes eines virtuellen Objekts durch Abbilden eines virtuellen Objekts, das in einem virtuellen Raum angeordnet ist und das Erscheinungsbild eines vorbestimmten Objekts darstellt, mittels einer in dem virtuellen Raum angeordneten virtuellen Kamera;
Einstellmittel für die virtuelle Kamera zum Einstellen eines Parameters für die virtuelle Kamera;
Umschaltbedingungs-Feststellungsmittel zum Feststellen, dass eine vorbestimmte Umschaltbedingung erfüllt ist, wenn ein Aufnahmewinkel der virtuellen Kamera relativ zu dem virtuellen Objekt, der gemäß dem Parameter festgestellt wird, innerhalb eines vorbestimmten Bereichs kommt;
**dadurch gekennzeichnet, dass** die Informationsverarbeitungsvorrichtung weiterhin enthält:
Ausgabesteuermittel zum selektiven Ausgeben an die Anzeigevorrichtung entweder des von dem Rendering-Mittel gerenderten Bildes des virtuellen Objekts oder eines Umschaltbildes, das zuvor durch Abbilden des vorbestimmten Objekts aus einem Aufnahmewinkel erhalten wurde, der dem vorbestimmten Bereich entspricht, wobei der Aufnahmewinkel identisch oder im Wesentlichen identisch mit dem Aufnahmewinkel der virtuellen Kamera relativ zu dem virtuellen Objekt ist; und
Umschaltmittel zum Umschalten des von dem Ausgabesteuermittel auszugebenden Ausgabebildes von dem Bild des virtuellen Objekts auf das Umschaltbild, wenn das Umschaltbedingungs-Feststellungsmittel feststellt, dass die Umschaltbedingung erfüllt ist,
worin das Umschaltbild aus einer Speichereinheit abgerufen wird; und worin das Umschaltbild ein Bild ist, das durch vorheriges Rendern eines präziseren virtuellen Objekts des vorbestimmten Objekts erhalten wird, das mit einer höheren Präzision modelliert ist, als das virtuelle Objekt, das zum Rendern des Bildes des virtuellen Objekts verwendet wird.

12. Informationsverarbeitungssystem enthaltend:
eine Anzeigevorrichtung; und
eine Informationsverarbeitungsvorrichtung, die mit der Anzeigevorrichtung verbunden ist und enthält:
Rendering-Mittel zum Rendern eines Bildes eines virtuellen Objekts durch Abbilden eines virtuellen Objekts, das in einem virtuellen Raum angeordnet ist und das Erscheinungsbild eines vorbestimmten Objekts darstellt, mittels einer in dem virtuellen Raum angeordneten virtuellen Kamera;
Einstellmittel für die virtuelle Kamera zum Einstellen eines Parameters für die virtuelle Kamera;
Umschaltbedingungs-Feststellungsmittel zum Feststellen, dass eine vorbestimmte Umschaltbedingung erfüllt ist, wenn Aufnahmewinkel der virtuellen Kamera relativ zu dem virtuellen Objekt, der gemäß dem Parameter festgestellt wird, innerhalb eines vorbestimmten Bereichs kommt;
**dadurch gekennzeichnet, dass** das Informationsverarbeitungssystem weiterhin enthält:
Ausgabesteuermittel zum selektiven Ausgeben an die Anzeigevorrichtung entweder des von dem Rendering-Mittel gerenderten Bildes des virtuellen Objekts oder eines Umschaltbildes, das zuvor durch Abbilden des vorbestimmten Objekts aus einem Aufnahmewinkel erhalten wurde, der dem vorbestimmten Bereich entspricht, wobei der Aufnahmewinkel identisch oder im Wesentlichen identisch mit dem Aufnahmewinkel der virtuellen Kamera relativ zu dem virtuellen Objekt ist; und
Umschaltmittel zum Umschalten des von dem Ausgabesteuermittel auszugebenden Ausgabebildes von dem Bild des virtuellen Objekts auf das Umschaltbild, wenn das Umschaltbedingungs-Feststellungsmittel feststellt, dass die Umschaltbedingung erfüllt ist
worin das Umschaltbild aus einer Speichereinheit abgerufen wird; und
worin das Umschaltbild ein Bild ist, das durch vorheriges Rendern eines präziseren virtuellen Objekts des vorbestimmten Objekts erhalten wird, das mit einer höheren Präzision modelliert ist als das virtuelle Objekt, das zum Rendern des Bildes des virtuellen Objekts verwendet wird.

13. Informationsverarbeitungsverfahren, bei dem ein Computer, der mit einer Anzeigevorrichtung verbunden ist, veranlasst wird, auszuführen:
einen Rendering-Schritt des Renderns eines Bildes eines virtuellen Objekts durch Abbilden eines virtuellen Objekts, das in einem virtuellen Raum angeordnet ist und das Erscheinungsbild eines vorbestimmten Objekts darstellt, mittels einer virtuellen Kamera, die in dem virtuellen Raum angeordnet ist;
einen Schritt zum Einstellen der virtuellen Kamera, bei dem ein Parameter für die virtuelle Kamera eingestellt wird;
einen Umschaltbedingungs-Feststellungsschritt des Feststellens, dass eine vorbestimmte Umschaltbedingung erfüllt ist, wenn ein gemäß dem Parameter bestimmter Aufnahmewinkel der virtuellen Kamera relativ zu dem virtuellen Objekt innerhalb eines vorbestimmten Bereichs kommt;
**dadurch gekennzeichnet, dass** das Informationsverarbeitungsverfahren ferner den mit einer Anzeigevorrichtung verbundenen Computer veranlasst, auszuführen:
einen Ausgabesteuerungsschritt des selektiven Ausgebens an die Anzeigevorrichtung entweder des im Rendering-Schritt gerenderten Bildes des virtuellen Objekts oder eines Umschaltbildes, das zuvor durch Abbilden des vorbestimmten Objekts aus einem Aufnahmewinkel erhalten wurde, der dem vorbestimmten Bereich entspricht, wobei der Aufnahmewinkel identisch oder im Wesentlichen identisch mit dem Aufnahmewinkel der virtuellen Kamera relativ zu dem virtuellen Objekt ist; und
einen Umschaltschritt des Umschaltens des in dem Ausgabesteuerungsschritt auszugebenden Ausgabebildes von dem Bild des virtuellen Objekts auf das Umschaltbild, wenn in dem Umschaltbedingungs-Feststellungsschritt festgestellt wird, dass die Umschaltbedingung erfüllt ist
worin das Umschaltbild aus einer Speichereinheit abgerufen wird; und
worin das Umschaltbild ein Bild ist, das durch vorheriges Rendern eines präziseren virtuellen Objekts des vorbestimmten Objekts erhalten wird, das mit einer höheren Präzision modelliert ist als das virtuelle Objekt, das zum Rendern des Bildes des virtuellen Objekts verwendet wird.

## Revendications

1. Un programme pour faire en sorte qu'un calculateur relié à un dispositif d'affichage fasse fonction :
d'un moyen de restitution, pour la restitution d'une image d'un objet virtuel par imagerie d'un objet virtuel placé dans un espace virtuel et représentant l'apparence d'un objet prédéterminé au moyen d'une caméra virtuelle placée dans l'espace virtuel ;
d'un moyen d'ajustement de caméra virtuelle, pour l'ajustement d'un paramètre pour la caméra virtuelle ;
d'un moyen de détermination de condition de basculement,
pour la détermination qu'une condition de basculement prédéterminée a été vérifiée lorsqu'un angle de prise de vue de la caméra virtuelle par rapport à l'objet virtuel déterminé en fonction du paramètre entre dans une plage prédéterminée ;
**caractérisé en ce qu'**il est en outre fait en sorte que le calculateur fasse fonction :
d'un moyen de contrôle de sortie, pour la délivrance sélective au dispositif d'affichage soit de l'image de l'objet virtuel restituée par le moyen de restitution, soit d'une image pour le basculement obtenue par imagerie de l'objet prédéterminé depuis un angle de prise de vue correspondant à la plage prédéterminée, l'angle de prise de vue étant identique ou substantiellement identique à l'angle de prise de vue de la caméra virtuelle par rapport à l'objet virtuel ; et
d'un moyen de basculement, pour le basculement, de l'image de l'objet virtuel à l'image pour le basculement, de l'image de sortie devant être délivrée par le moyen de contrôle de sortie lorsque le moyen de détermination de condition de basculement détermine que la condition de basculement a été vérifiée,
dans lequel l'image pour le basculement est récupérée à partir d'une unité de stockage ; et
dans lequel l'image pour le basculement est une image obtenue par restitution préalable d'un objet virtuel de plus grande précision de l'objet prédéterminé qui est modélisé avec une précision supérieure à celle de l'objet virtuel qui est utilisé pour restituer l'image de l'objet virtuel.

2. Le programme selon la revendication 1, dans lequel l'image pour le basculement est une image obtenue par imagerie préalable d'une entité réelle de l'objet prédéterminé avec une caméra réelle.

3. Le programme selon l'une des revendications 1 à 2, dans lequel le moyen de détermination de condition de basculement détermine que la condition de basculement a été vérifiée lorsqu'un angle de prise de vue et une position de prise de vue de la caméra virtuelle par rapport à l'objet virtuel, qui sont déterminés en fonction du paramètre, entrent dans une plage prédéterminée.

4. Le programme selon l'une des revendications 1 à 3, dans lequel il est en outre fait en sorte que le calculateur fasse fonction :
d'un moyen de détermination de condition de retour, pour déterminer si une condition de retour prédéterminée a été ou non vérifiée pour faire retourner l'image de sortie à l'image de l'objet virtuel restituée par le moyen de restitution lors d'un état dans lequel l'image de sortie est basculée vers l'image pour basculement ; et
un moyen de retour, pour faire retourner l'image de sortie à l'image de l'objet virtuel restituée par le moyen de restitution lorsque le moyen de détermination de condition de retour détermine que la condition de retour a été vérifiée.

5. Le programme selon l'une des revendications 1 à 4, dans lequel :
lorsque le moyen de détermination de condition de basculement détermine que la condition de basculement a été vérifiée, le moyen d'ajustement de caméra virtuelle, avant que le moyen de basculement ne bascule l'image de sortie, ajuste le paramètre de telle sorte que l'angle de prise de vue de la caméra virtuelle par rapport à l'objet virtuel soit progressivement modifié vers un angle de prise de vue correspondant à un angle de prise de vue de l'image pour le basculement ; et
le moyen de restitution restitue l'image de l'objet virtuel également pendant la modification du paramètre.

6. Le programme selon l'une des revendications 1 à 4, dans lequel :
lorsque le moyen de détermination de condition de basculement détermine que la condition de basculement a été vérifiée, le moyen d'ajustement de caméra virtuelle, avant que le moyen de basculement ne bascule l'image de sortie, ajuste le paramètre de telle sorte que l'angle de prise de vue et une position de prise de vue de la caméra virtuelle par rapport à l'objet virtuel se modifient progressivement vers un angle de prise de vue et une position de prise de vue correspondant à un angle de prise de vue et une position de prise de vue de l'image pour le basculement ; et
le moyen de restitution restitue l'image de l'objet virtuel également pendant la modification du paramètre.

7. Le programme selon l'une des revendications 1 à 6, dans lequel :
le moyen de détermination de condition de basculement détermine si l'une quelconque d'une pluralité de conditions de basculement a été vérifiée, ou non ; et
lorsque le moyen de détermination de condition de basculement détermine que l'une quelconque des conditions de basculement a été vérifiée, le moyen de basculement bascule l'image de sortie vers l'une d'une pluralité d'images pour le basculement qui est associée à la condition de basculement qui a été déterminée comme ayant été vérifiée.

8. Le programme selon l'une des revendications 1 à 7, faisant en outre en sorte que le calculateur fasse fonction d'un moyen d'acceptation d'entrée pour l'acceptation d'une entrée sur la base d'un actionnement par l'utilisateur,
dans lequel le moyen d'ajustement de caméra virtuelle ajuste le paramètre en fonction de l'entrée acceptée par le moyen d'acceptation d'entrée.

9. Le programme selon l'une des revendications 1 à 8, dans lequel le moyen d'ajustement de caméra virtuelle ajuste le paramètre de telle sorte que l'objet virtuel soit positionné à l'intérieur d'un champ de visée de la caméra virtuelle.

10. Le programme selon l'une des revendications 1 à 9, dans lequel :
le moyen de restitution restitue deux images d'objet virtuel d'une manière visible stéréoscopiquement par imagerie avec deux caméras virtuelles ; et
le moyen de basculement bascule, des deux images d'objet virtuel restituées par le moyen de restitution à deux images pour le basculement visibles stéréoscopiquement, l'image de sortie à délivrer au dispositif d'affichage.

11. Un appareil de traitement de l'information relié à un dispositif d'affichage, l'appareil de traitement de l'information comprenant :
un moyen de restitution, pour la restitution d'une image d'un objet virtuel par imagerie d'un objet virtuel placé dans un espace virtuel et représentant l'apparence d'un objet prédéterminé au moyen d'une caméra virtuelle placée dans l'espace virtuel ;
un moyen d'ajustement de caméra virtuelle, pour l'ajustement d'un paramètre pour la caméra virtuelle ;
un moyen de détermination de condition de basculement, pour la détermination qu'une condition de basculement prédéterminée a été vérifiée lorsqu'un angle de prise de vue de la caméra virtuelle par rapport à l'objet virtuel déterminé en fonction du paramètre entre dans une plage prédéterminée ;
**caractérisé en ce que** l'appareil de traitement de l'information comprend en outre :
un moyen de contrôle de sortie, pour la délivrance sélective au dispositif d'affichage soit de l'image de l'objet virtuel restituée par le moyen de restitution, soit d'une image pour le basculement obtenue par imagerie de l'objet prédéterminé depuis un angle de prise de vue correspondant à la plage prédéterminée, l'angle de prise de vue étant identique ou substantiellement identique à l'angle de prise de vue de la caméra virtuelle par rapport à l'objet virtuel ; et
un moyen de basculement, pour le basculement, de l'image de l'objet virtuel à l'image pour le basculement, de l'image de sortie devant être délivrée par le moyen de contrôle de sortie lorsque le moyen de détermination de condition de basculement détermine que la condition de basculement a été vérifiée,
dans lequel l'image pour le basculement est récupérée à partir d'une unité de stockage ; et
dans lequel l'image pour le basculement est une image obtenue par restitution préalable d'un objet virtuel de plus grande précision de l'objet prédéterminé qui est modélisé avec une précision supérieure à celle de l'objet virtuel qui est utilisé pour restituer l'image de l'objet virtuel.

12. Un système de traitement de l'information comprenant :
un dispositif d'affichage ; et
un appareil de traitement de l'information relié au dispositif d'affichage et comprenant :
un moyen de restitution, pour la restitution d'une image d'un objet virtuel par imagerie d'un objet virtuel placé dans un espace virtuel et représentant l'apparence d'un objet prédéterminé au moyen d'une caméra virtuelle placée dans l'espace virtuel ;
un moyen d'ajustement de caméra virtuelle, pour l'ajustement d'un paramètre pour la caméra virtuelle ;
un moyen de détermination de condition de basculement, pour la détermination qu'une condition de basculement prédéterminée a été vérifiée lorsqu'un angle de prise de vue de la caméra virtuelle par rapport à l'objet virtuel déterminé en fonction du paramètre entre dans une plage prédéterminée ;
**caractérisé en ce que** l'appareil de traitement de l'information comprend en outre :
un moyen de contrôle de sortie, pour la délivrance sélective au dispositif d'affichage soit de l'image de l'objet virtuel restituée par le moyen de restitution, soit d'une image pour le basculement obtenue par imagerie de l'objet prédéterminé depuis un angle de prise de vue correspondant à la plage prédéterminée, l'angle de prise de vue étant identique ou substantiellement identique à l'angle de prise de vue de la caméra virtuelle par rapport à l'objet virtuel ; et
un moyen de basculement, pour le basculement, de l'image de l'objet virtuel à l'image pour le basculement, de l'image de sortie devant être délivrée par le moyen de contrôle de sortie lorsque le moyen de détermination de condition de basculement détermine que la condition de basculement a été vérifiée,
dans lequel l'image pour le basculement est récupérée à partir d'une unité de stockage ; et
dans lequel l'image pour le basculement est une image obtenue par restitution préalable d'un objet virtuel de plus grande précision de l'objet prédéterminé qui est modélisé avec une précision supérieure à celle de l'objet virtuel qui est utilisé pour restituer l'image de l'objet virtuel.

13. Un procédé de traitement de l'information pour faire en sorte qu'un calculateur relié à un dispositif d'affichage exécute :
une étape de restitution, pour la restitution d'une image d'un objet virtuel par imagerie d'un objet virtuel placé dans un espace virtuel et représentant l'apparence d'un objet prédéterminé au moyen d'une caméra virtuelle placée dans l'espace virtuel ;
une étape d'ajustement de caméra virtuelle, pour l'ajustement d'un paramètre pour la caméra virtuelle ;
une étape de détermination de condition de basculement, pour la détermination qu'une condition de basculement prédéterminée a été vérifiée lorsqu'un angle de prise de vue de la caméra virtuelle par rapport à l'objet virtuel déterminé en fonction du paramètre entre dans une plage prédéterminée ;
**caractérisé en ce que** le procédé de traitement de l'information fait en outre en sorte que le calculateur relié à un dispositif d'affichage exécute :
une étape de contrôle de sortie, pour la délivrance sélective au dispositif d'affichage soit de l'image de l'objet virtuel restituée à l'étape de restitution, soit d'une image pour le basculement obtenue par imagerie de l'objet prédéterminé depuis un angle de prise de vue correspondant à la plage prédéterminée, l'angle de prise de vue étant identique ou substantiellement identique à l'angle de prise de vue de la caméra virtuelle par rapport à l'objet virtuel ; et
une étape de basculement, pour le basculement, de l'image de l'objet virtuel à l'image pour le basculement, de l'image de sortie devant être délivrée à l'étape de contrôle de sortie lorsqu'il est déterminé à l'étape de détermination de condition de basculement que la condition de basculement a été vérifiée,
dans lequel l'image pour le basculement est récupérée à partir d'une unité de stockage ; et
dans lequel l'image pour le basculement est une image obtenue par restitution préalable d'un objet virtuel de plus grande précision de l'objet prédéterminé qui est modélisé avec une précision supérieure à celle de l'objet virtuel qui est utilisé pour restituer l'image de l'objet virtuel.
